# EUROPEAN PATENT SPECIFICATION

(11) **EP 1 415 835 B1**
(45) Date of publication and mention of the grant of the patent: **01.03.2006**
(21) Application number: 03024593.0
(22) Date of filing: 28.10.2003
(51) Int. Cl.: B60J 5/04, E05D 5/06

(54) **Reinforcing member for a vehicle door, and door featuring such a reinforcing member**
Verstärkungsteil für eine Fahrzeugtür und Tür mit einem solchen Verstärkungsteil
Dispositif de renfort de porte pour véhicule automobile et porte comportant ledit dispositif

(30) Priority: 29.10.2002 IT TO20020936
(43) Date of publication of application: 06.05.2004
(73) Proprietor: Wagon Automotive S.r.l., 10070 Fiano (IT)
(72) Inventor: PROCOPIO, Domenico, 10090 Reano (IT)
(74) Representative: Franzolin, Luigi

(56) References cited:
- DE-A- 10 063 509
- US-A- 6 015 182
- US-B1- 6 205 714
- US-B1- 6 367 863

## Description

The present invention relates to a reinforcing member for a vehicle door.

A vehicle door normally comprises a structure defined by contoured sheet metal panels fitted to one another, and which is connected to a post of the vehicle by two hinges. Each hinge is fixed on one side to the post, and on the other side to one of the panels defining the door. More specifically, when open, the door is supported solely by the hinges, so that stress is concentrated at the fastening region of the hinges to the door, and may deform the panel, which is made of relatively thin sheet metal.

To prevent deformation of the sheet metal, the hinge fastening regions are known to be strengthened by means of reinforcing members, which comprise a substantially flat first portion fixed, e.g. welded, to the door, and a drilled, threaded second portion connected to the hinge.

A first known type of reinforcing member is extruded in one piece. That is, the supporting member is defined by a length of appropriately contoured extruded bar, and comprises, integrally, a platelike first portion, and a second portion defining a central projection of the first portion, and which is drilled and threaded. The drawback of reinforcing members of this type is substantially the high production cost involved, which is mainly due to the extrusion process.

A second type of reinforcing member comprises a substantially flat first portion cut from sheet metal; and a cylindrical second portion produced by drawing the first portion, and which is then threaded. This second type is undoubtedly cheaper than the first, but has disadvantages, substantially as regards the dimensional limitations of the second portion in relation to the thickness of the first.

That is to say, the drawing process produces creep of the material; and to obtain a second portion of sufficient axial length to form the necessary number of threads may involve overstretching the sheet metal and so producing an undesired reduction in the thickness of the second portion of the reinforcing member.

Similarly, imposing a minimum thickness of the second portion also limits the axial length obtainable, and therefore the number of threads that can be formed on the second portion.

Whichever the case, the dimensions of the second portion are related to the thickness of the first, and, given the limit posed on the thickness of the first portion, the obtainable dimensions of the second portion may not be sufficient to ensure optimum mechanical strength.

Though cheaper, the second type of reinforcing member is therefore not altogether reliable.

In addition, threading the second portion further reduces its actual thickness, so that, in the event the thread on the second portion is damaged accidentally or through error on the part of the fitter when assembling the door, the thread cannot be repaired, and, since the reinforcing member is welded irremovably to the door, the whole door must be scrapped.

It is an object of the present invention to provide a vehicle door reinforcing member designed to eliminate the drawbacks of the known art, and which combines relatively low cost and a high degree of dependability.

According to the present invention, there is provided a reinforcing member for a vehicle door; the reinforcing member connecting the door to a hinge, and comprising a substantially flat first portion connected to the door, and a substantially cylindrical second portion connected to said hinge; the reinforcing member being characterized in that the first and second portion are two separate members connected rigidly to each other.

In this way, high-cost extrusion can be avoided, while at the same time sizing the first and second portion separately, as a function of their respective structural requirements, by means of relatively low-cost operations.

The present invention also relates to a door.

According to the present invention, there is provided a vehicle door pivoting on a post by means of a hinge; said door comprising sheet metal panels connected to one another; and said door being characterized by comprising a reinforcing member as claimed in any one of Claims 1 to 9; said reinforcing member being fixed to one of said sheet metal panels.

A preferred, non-limiting embodiment of the present invention will be described by way of example with reference to tne accompanying drawings, in which:
Figure 1 shows a section, with parts removed for clarity, of a reinforcing member fitted to a vehicle door;
Figure 2 shows a larger-scale plan view of the Figure 1 reinforcing member;
Figure 3 shows a section along line III-III of the Figure 2 reinforcing member;
Figure 4 shows a larger-scale, partly sectioned side view of a detail of the Figure 1 reinforcing member.

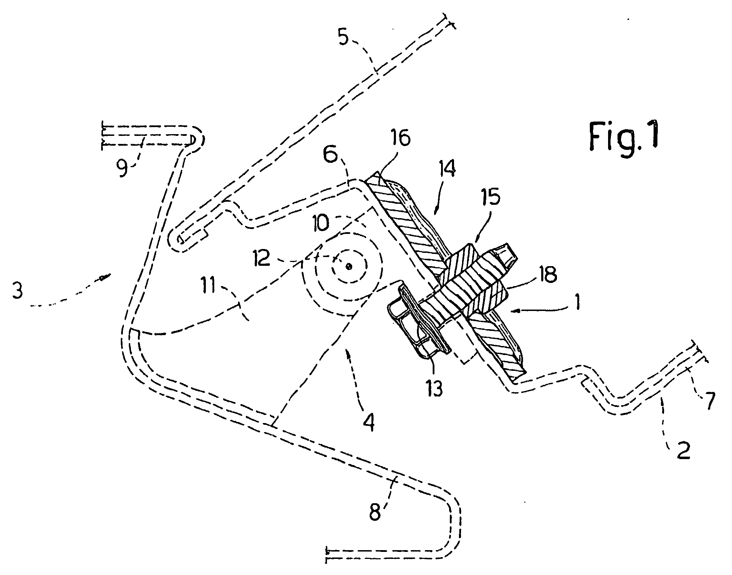

Number 1 in Figure 1 indicates a reinforcing member fitted to a door 2 pivoting on a post 3 by means of a hinge 4.

Door 2 is defined by contoured sheet metal panels 5, 6, 7 connected to one another. Similarly, post 3 is defined by contoured panels 8 and 9 also connected to each other. Hinge 4 comprises two brackets 10, 11 pivoting with respect to each other about a pin 12 and connected to door 2 and post 3 respectively. Bracket 10 rests on panel 6 of door 2, and is connected to reinforcing member 1 by means of a screw 13. Reinforcing member 1 comprises a substantially flat portion 14 welded to the opposite side of panel 6 to bracket 10; and a cylindrical portion 15 threaded internally for engagement by screw 13. In other words, panel 6 of door 2 is partly sandwiched between bracket 10 and portion 14 of reinforcing member 1.

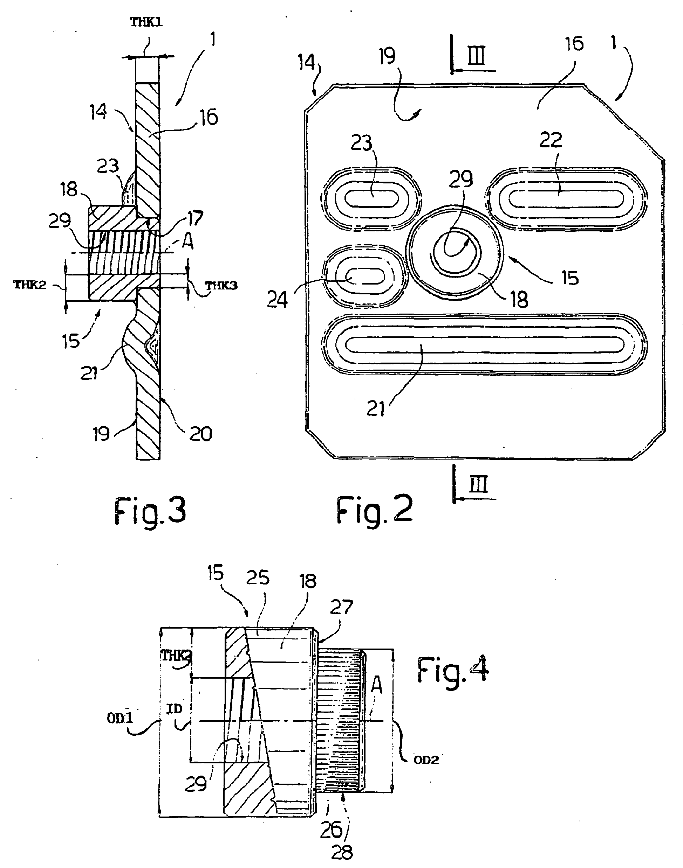

With reference to Figures 2 and 3, portion 14 is defined by a substantially rectangular plate 16 with bevelled corners, and comprises a hole 17 engaged by a bushing 18 defining cylindrical portion 15. Plate 16 comprises a face 19; a face 20; and ribs 21, 22, 23, 24 arranged about hole 17, projecting with respect to face 19, and extending parallel to two opposite sides of plate 16.

With reference to Figure 4, bushing 18 extends about an axis A, and comprises a head 25 with an outside diameter OD1; and a stem 26, which has an outside diameter OD2 smaller than outside diameter OD1, so as to form a shoulder 27 between head 25 and stem 26, and has a knurled cylindrical outer surface 28. Bushing 18 has a threaded hole 29 with an inside diameter ID. Plate 16 is of substantially constant thickness THK1; while bushing 18, at head 25, is of a thickness THK2 defined by the difference between diameters OD1 and ID, and, at stem 26, is of a thickness THK3 smaller than THK2.

Bushing 18 is interference-fitted inside hole 17 in plate 16, so as to connect plate 16 and bushing 18 rigidly to each other; and the length of stem 26 substantially equals the thickness of plate 16, so that stem 26 is housed completely within the thickness THK1 of plate 16 when face 19 of plate 16 is positioned resting against shoulder 27 of bushing 18 (Figure 3).

Reinforcing member 1 as described has numerous advantages. In particular, from the production standpoint, plate 16 and bushing 18 are produced separately and then assembled; plate 16 is blanked from strip sheet metal and drawn slightly to form ribs 20, 21, 22 and 23; and bushing 18, formed by machining bar stock, is driven inside hole 17 in plate 16; so that the production process can be optimized using a transfer die to blank and draw plate 16 and at the same time drive bushing 18 inside hole 17.

The structural advantages substantially lie in the fact that, being produced separately, portions 14 and 15 can be sized independently and as best to achieve the structural strength required of reinforcing member 1. In particular, thickness THK1 of plate 16 and thickness THK2 of bushing 18 are advantageously determined independently.

In variations not shown, the bushing may be fitted to plate 16 in any manner, other than a drive fit.

Plate 16 may also be of any shape, and changes may be made to the shape, number and arrangement of ribs 21-24.

## Claims

1. A reinforcing member for a vehicle door; the reinforcing member (1) connecting the door (2) to a hinge (4), and comprising a substantially flat first portion (14) connected to the door (2); and a substantially cylindrical second portion (15) connected to said hinge (4); the reinforcing member (1) being **characterized in that** the first and second portion (14, 15) are two separate members (16, 18) connected rigidly to each other.

2. A member as claimed in Claim 1, **characterized in that** the first portion (14) is a plate (16), and the second portion (15) is a bushing (18).

3. A member as claimed in Claim 2, **characterized in that** the bushing (18) has a threaded hole (29).

4. A member as claimed in Claim 2 or 3, **characterized in that** the plate (16) comprises a hole (27); said bushing (18) being inserted inside said hole (17) and fixed to the plate (16).

5. A member as claimed in Claim 4, **characterized in that** said bushing (18) is interference-fitted to the plate (16).

6. A member as claimed in Claim 5, **characterized in that** said bushing (18) has a knurled outer surface (28) which engages the plate (16) inside said hole (17).

7. A member as claimed in any one of Claims 4 to 6, **characterized in that** said bushing (18) comprises a head (25) having a first diameter (OD1); and a stem (26) having a second diameter (OD2) smaller than the first diameter (OD1), so as to form a shoulder (27) between the head (25) and stem (26).

8. A member as claimed in Claim 7, **characterized in that** the plate (16) has a face (19); said face (19) of the plate (16) resting against said shoulder (27) of the bushing (18).

9. A member as claimed in Claim 8, **characterized in that** the length of the stem (26) substantially equals the thickness (THK1) of the plate (16).

10. A vehicle door pivoting on a post (3) by means of a hinge (4); said door (2) comprising sheet metal panels (5, 6, 7) connected to one another; and said door (2) being **characterized by** comprising a reinforcing member (1) as claimed in any one of Claims 1 to 9; said reinforcing member (1) being fixed to one of said sheet metal panels (5, 6, 7).

## Patentansprüche

1. Verstärkungs- bzw. Versteifungsglied für eine Fahrzeugtür, wobei das Verstärkungsglied (1) die Tür (2) mit einem Scharnier (4) verbindet, und umfaßt einen im wesentlichen flachen ersten Abschnitt (14), verbunden mit der Tür (2); und einem im wesentlichen zylindrischen zweiten Abschnitt (15), verbunden mit dem Scharnier (4); wobei das Verstärkungsglied (1) **dadurch gekennzeichnet ist, daß** der erste und zweite Abschnitt (14, 15) zwei unabhängige bzw. getrennte, starr miteinander verbundene Glieder (16, 18) sind,

2. Glied entsprechend Anspruch 1, **gekennzeichnet dadurch, daß** der erste Abschnitt (14) eine Platte (16) ist, und daß der zweite Abschnitt (15) eine Führungshülse bzw. Buchse bzw. Gleitiager (18) ist.

3. Glied entsprechend Anspruch 2, **gekennzeichnet dadurch, daß** die Führungshülse ein gewindetes Loch (29) aufweist.

4. Glied entsprechend Anspruch 2 oder 3, **gekennzeichnet dadurch, daß** die Platte (16) ein Loch (17) aufweist; wobei die Führungshülse (18) in das Loch (17) eingeführt und an der Platte (16) befestigt ist.

5. Glied entsprechend Anspruch 4, **gekennzeichnet dadurch, daß** die Führungshülse (18) pressgepaßt bzw. pressverbunden in die Platte (16) ist.

6. Glied entsprechend Anspruch 5, **dadurch gekennzeichnet, daß** die Führungshülse (18) eine gerändelte äußere Fläche (28) aufweist, welche die Platte (16) innerhalb des Loches (17) ergreift.

7. Glied entsprechend einem beliebigen der Ansprüche 4 bis 6, **gekennzeichnet dadurch, daß** die Führungshülse (18) einen Kopf (25) umfaßt, der einen ersten Durchmesser (OD1) aufweist; und einen Stamm (26), der einen zweiten Durchmesser (OD2) aufweist, kleiner als der erste Durchmesser (OD1), um eine Schulter (27) zwischen Kopf (25) und Stamm (26) zu formen

8. Glied entsprechend Anspruch 7, **gekennzeichnet dadurch, daß** die Platte (16) eine Seite bzw. Fläche (19) aufweist; wobei die Seite (19) der Platte (16) gegen die Schulter (27) der Führungshülse (18) ruht.

9. Glied entsprechend Anspruch 8, **gekennzeichnet dadurch, daß** die Länge des Stammes (26) im wesentlichen der Dicke (THK1) der Platte (16) gleicht.

10. Fahrzeugtür, drehbar befestigt an einer Säule (3) mittels eines Scharniers (4); wobei die Tür (2) umfaßt mitelnander verbundene Blechplatten bzw. -panele (5, 6, 7); und wobei die Tür (2) **gekennzeichnet ist durch** Umfassen eines Verstärkungsglieds (1) entsprechend einem beliebigen der Ansprüche 1 bis 9; wobei das Verstärkungsglied (1) fixiert ist an eine der Blechplatten (5, 6, 7).

## Revendications

1. Elément de renfort pour une portière de véhicule ; l'élément de renfort (1) raccordant la portière (2) à une articulation (4) et comprenant une première portion sensiblement plane (14) raccordée à la portière (2) ; et une seconde portion sensiblement cylindrique (15) raccordée à ladite articulation (4) ; l'élément de renfort (1) étant **caractérisé en ce que** la première et la seconde portion (14, 15) sont deux éléments séparés (16, 18) raccordés rigidement l'un à l'autre.

2. Elément selon la revendication 1, **caractérisé en ce que** la première portion (14) est une plaque (16) et la seconde portion (15) est un manchon (18).

3. Elément selon la revendication 2, **caractérisé en ce que** le manchon (18) présente un trou fileté (29).

4. Elément selon la revendication 2 ou 3, **caractérisé en ce que** la plaque (16) comprend un trou (17) ; ledit manchon (18) étant inséré à l'intérieur dudit trou (17) et fixé sur la plaque (16).

5. Elément selon la revendication 4, **caractérisé en ce que** ledit manchon (18) est ajusté par interférence sur la plaque (16).

6. Elément selon la revendication 5, **caractérisé en ce que** ledit manchon (18) présente une surface extérieure moletée (28) qui coopère avec la plaque (16) à l'intérieur dudit trou (17).

7. Elément selon l'une quelconque des revendications 4 à 6, **caractérisé en ce que** ledit manchon (18) comprend une tête (25) ayant un premier diamètre (OD1) ; et une tige (26) ayant un second diamètre (OD2) plus petit que le premier diamètre (OD1), de façon à former un épaulement (27) entre la tête (25) et la tige (26).

8. Elément selon la revendication 7, **caractérisé en ce que** la plaque (16) présente une face (19) ; ladite face (19) de la plaque (16) reposant contre ledit épaulement (27) du manchon (18).

9. Elément selon la revendication 8, **caractérisé en ce que** la longueur de la tige (26) est sensiblement égale à l'épaisseur (THK1) de la plaque (16).

10. Portière de véhicule pivotant sur un montant (3) au moyen d'une articulation (4) ; ladite portière (2) comprenant des panneaux de tôle métallique (5, 6, 7) raccordés entre eux ; et ladite portière (2) étant **caractérisée par** le fait de comprendre un élément de renfort (1), tel que défini dans l'une quelconque des revendications 1 à 9 ; ledit élément de renfort (1) étant fixé sur l'un desdits panneaux de tôle métallique (5, 6, 7) .
